# EUROPÄISCHE PATENTSCHRIFT

(11) **EP 1 388 240 B1**
(45) Veröffentlichungstag und Bekanntmachung des Hinweises auf die Patenterteilung: **03.08.2005**
(21) Anmeldenummer: 02740578.6
(22) Anmeldetag: 08.05.2002
(51) Int. Cl.: H04L 25/02

(54) **VERFAHREN UND VORRICHTUNG ZUR REKONSTRUKTION VON MIT EINER SYMBOLRATE GETAKTETEN DATEN AUS EINEM VERZERRTEN ANALOGEN SIGNAL**
METHOD AND DEVICE FOR RECONSTRUCTING DATA CLOCKED AT A SYMBOL RATE FROM A DISTORTED ANALOGUE SIGNAL
PROCEDE ET DISPOSITIF POUR RECONSTRUIRE DES DONNEES CADENCEES A UN DEBIT DE SYMBOLES A PARTIR D'UN SIGNAL ANALOGIQUE DEFORME

(30) Priorität: 17.05.2001 DE 10124177
(43) Veröffentlichungstag der Anmeldung: 11.02.2004
(73) Patentinhaber: Infineon Technologies AG, 81669 München (DE)
(72) Erfinder: DUDA, Thomas, 47269 Duisburg (DE); GAZSI, Lajos, 40239 Düsseldorf (DE); GREGORIUS, Peter, 81476 München (DE); HINZ, Torsten, 41468 Neuss (DE); RENNER, Martin, 40822 Mettmann (DE)
(74) Vertreter: Reinhard - Skuhra - Weise & Partner
(86) Internationale Anmeldenummer: PCT/EP2002/005106
(87) Internationale Veröffentlichungsnummer: WO 2002/093852

(56) Entgegenhaltungen:
- EP-A- 0 467 412
- EP-A- 0 831 480
- US-A- 5 293 405
- US-A- 5 933 467
- DATABASE EPODOC [Online] EUROPEAN PATENT OFFICE, THE HAGUE, NL; XP002224302 & KR 9 308 180 A (SAMSUNG ELECTRONICS CO LTD) 26. August 1993 (1993-08-26)

## Beschreibung

Die Erfindung betrifft ein Verfahren sowie eine Vorrichtung zur Rekonstruktion von mit einer Symbolrate getakteten, insbesondere rein stochastischen, Daten aus einem analogen Signal, das durch Übertragung über eine Übertragungsstrecke verzerrt und gedämpft wurde.

Bei digitalen Übertragungssystemen werden digitale Daten in Form von rechteck- oder trapezförmigen Impulsen in ein Übertragungskabel, üblicherweise ein metallisches oder optisches Kabel, eingespeist und am anderen Ende des Kabels mit einem Empfänger empfangen. Das Datensignal wird infolge der Übertragung bezüglich der Amplitude gedämpft sowie bezüglich der Phasenlage und Gruppenlaufzeit verzerrt, wobei es zusätzlich durch nieder- und hochfrequente Störer überlagert werden kann. Das resultierende verzerrte Signal muss mittels eines Empfängers verstärkt, entzerrt und die Dateninformation zurückgewonnen werden. Hierzu umfassen bekannte Empfänger im wesentlichen vier Komponenten, nämlich einen Verstärker, einen Entzerrer (Equalizer), einen Takt- und einen Datenrückgewinnungsschaltkreis.

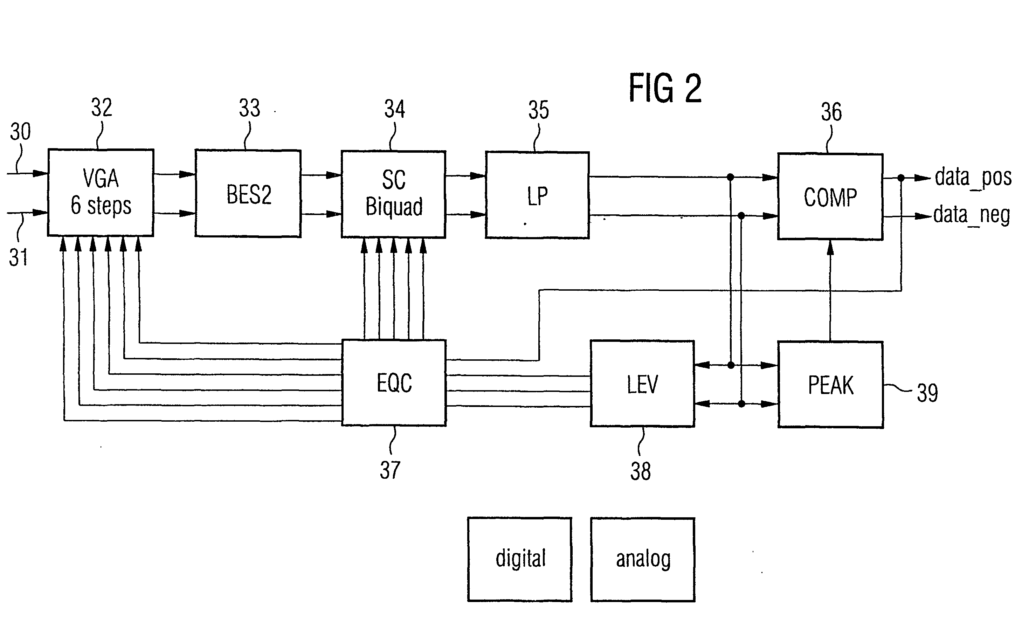

Figur 2 zeigt einen bekannten Empfänger zur Rekonstruktion von Daten, der in überwiegend analoger Schaltungstechnik aufgebaut ist. Der Empfängerpfad umfasst einen einstellbaren Verstärker (VGA-Stufe) 32 mit Empfängereingängen 30,31, der das am Eingang zugeführte Signal verstärkt, einen Rausch- und Kreuzkopplungsfilter (oftmals Tiefpässe höherer Ordnung), der hier als Besselfilter ausgeführt ist, und ein Kabelapproximationsfilter 34 in SC-Biquad oder GmC-Realisierung.

Nach dem Kabelapproximationsfilter 34 ist ein analoger Tiefpass 35 angeschlossen, der höhere, von Rauschen und Jitter stammende Frequenzen oberhalb der Übertragungsfrequenz, d.h. der Symbolrate, abschneidet und somit ein weißes bzw. farbiges Rauschen oberhalb der Datenrate unterdrückt.

Die Gesamtübertragungsfunktion des Empfängerpfades bis zur Diskretisierung des Signals durch einen Komparator 36 bildet im optimalen Fall die inverse Übertragungsfunktion des Kabels über die Frequenz in Betrag und Phase. Dadurch wird das am Eingang 31,32 anstehende Signal im wesentlichen vollständig entzerrt und kann einer Datenrückgewinnung zugeführt werden.

Zur Einstellung der Signalamplitude wird das Signal nach dem Entzerrfilter 35 mit Hilfe eines Peak-Detektors oder Amplitudendetektors 38 und Level-Detektors 39 der Amplitude nach bewertet und entsprechend dem Betrag der Amplitude die Verstärkung des Verstärkers 32 eingestellt. In Abhängigkeit von der Verstärkungseinstellung wird das Kabelapproximationsfilter 34 in diskreten Schritten an die Kabelübertragungsfunktion angepasst. Hierzu bestimmt eine Equalizer-Steuereinheit 37, die mit dem Verstärker 32, dem Kabelapproximationsfilter 34, dem Komparator 36 und dem Level-Detektor 38 verbunden ist, die Koeffizienten der Kabelapproximation, um die Inverse der Kabelübertragungsfunktion möglichst genau nachzubilden.

Ein Nachteil dieser analogen Realisierung ist insbesondere, dass die eingestellten Pol- und Nullstellen des verwendeten Rausch- und Kreuzkopplungsfilter 2 als auch des Kabelapproximationsfilters 3 von parasitären Pol- und Nullstellen beeinflusst werden, wodurch sich die ideale Adaptionsfunktion des Empfänger entsprechend verfälscht.

Weiterhin ist eine analoge Realisierung zur Entzerrung und Rückerkennung von Daten anfällig gegen Fertigungstoleranzen als auch applikative Varianzen des Übertragungskanals. Zusätzlich können Temperaturgradienten als auch mechanische Gradienten die empfindlichen Schaltungen im Empfänger zusätzlich in ihrer Funktionsgüte einschränken und somit eine fehlerfreie Rückerkennung der gedämpften und verzerrten Signale beeinträchtigen.

Ferner ist bei analogen Realisierungen die Anzahl der Koeffizientensätze für die Kabelapproximation beschränkt, womit auch die Güte der Kabelapproximation begrenzt ist. Die aus einer Systemsimulation ermittelten Koeffizienten des Approximationsfilters sind nämlich nur für einen bestimmten Kabeltyp bei einer gegebenen Applikationsbedingung ideal. Varianzen in den Applikationsbedingungen, wie z.B. verschiedene Kabellängen, unterschiedliche Temperatur etc. führen oftmals zu einer fehlerhaften Datenerkennung und somit zu höheren Bitfehlerraten, d.h. zu einer mangelhaften Datenrückerkennung.

Weiterhin ist zu bemerken, dass insbesondere bei großen Kabellängen bzw. allgemein bei hoher Kabeldämpfung durch die √f-Charakteristik, d.h. die Abhängigkeit der Kabeldämpfung von Frequenz und Kabellänge, der Abstand von einem Stützpunkt bzw. Koeffizientensatz zum nächsten Stützpunkt bzw. Koeffizientensatz entscheidend für die Fehlerrate ist. Ist der Abstand zwischen zwei Stützpunkten bei hoher Kabeldämpfung zu groß, steigt die Bitfehlerrate überproportional an für Zwischenwerte zu den beiden benachbarten Stützpunkten. Um diese Eigenschaft zu verhindern, muss der Abstand der Stützpunkte und somit der Koeffizientensätze zu hohen Kabeldämpfungen hin verringert und somit die Anzahl der Stützpunkte erhöht werden.

Auf Grund von parasitären Einflüssen und Eigenschaften von analogen Lösungen zur Entzerrung ist dies dort nur unzureichend realisierbar.

Beispielsweise sieht die EP 0 467 412 vor, zur Rekonstruktion von Daten aus einem analogen Signal das analoge Eingangssignal zunächst mittels eines Tiefpassfilters zu begrenzen, wodurch hochfrequente Rauschanteile eliminiert werden und dann das analoge Signal mittels eines überabtastenden Analog-Digital-Wandlers zu digitalisieren.

Das Dokument US 5,293,405 beschreibt die Rekonstruktion von Daten aus einem digitalen Signal, wobei die Daten mit einer Symbolrate getaktet sind. Zur Rekonstruktion des durch Übertragung über eine Übertragungsstrecke verzerrten und gedämpften Signals sieht die US 5,293,405 das Verstärken der gedämpften Signalamplitude und das Durchführen einer Kabelapproximation mittels eines digital realisierten Kabelapproximationsfilters vor.

Obgleich durch die vorgenannten Maßnahmen eine relativ fehlerfreie Datenrückgewinnung erreicht werden kann, ist es wünschenswert die Qualität der Entzerrung und Datenrückgewinnung weiter zu verbessern und die Bitfehlerrate stärker abzusenken.

Es ist die Aufgabe der vorliegenden Erfindung, die Qualität der Entzerrung und Datenrückgewinnung zu verbessern und die Bitfehlerrate weiter zu senken.

Diese Aufgabe wird erfindungsgemäß durch das im Patentanspruch 1 angegebene Verfahren sowie durch eine Vorrichtung mit den im Patentanspruch 15 angegebenen Merkmalen gelöst. Weitere Ausgestaltungen der Erfindung ergeben sich aus den Unteransprüchen.

Ein wesentlicher Gedanke der Erfindung besteht darin, die meisten Elemente des erfindungsgemäßen Empfängers in digitaler Schaltungstechnik zu implementieren, da die Koeffizienten bzw. Parameter für digitale Elemente, wie z.B. digitale Filter, auch im Betrieb leicht veränderbar sind. Im übrigen wird die Verträglichkeit des (analog/digital realisierten) Empfängers gegenüber Eingangsjitter durch eine analog/digitale Realisierung wesentlich verbessert.

Weitere Vorteile bietet die Erfindung durch die Möglichkeit einer einfacheren Implementierung eines Antialiasingfilters durch die Überabtastung eines Analog/Digital-Wandlers und der Möglichkeit einer nachträglichen Anpassung der Schaltung an veränderte Eigenschaften des Übertragungskanals.

Das erfindungsgemäße Verfahren zur Rekonstruktion von Daten aus einem Signal, das durch Übertragung über eine Übertragungsstrecke mit einer Kabelübertragungsfunktion verzerrt und gedämpft wurde, umfasst im wesentlichen folgende Schritte:
a) das Verstärken der Signalamplitude zur Kompensation der Kabeldämpfung;
b) Filtern hochfrequenter Störfrequenzen oberhalb der Symbolrate und Filtern niederfrequenter Störer unterhalb des niedrigsten spektralen Anteils des Nutzsignals;
c) Diskretisieren des analogen Signals mittels eines überabgetasteten Analog/Digital-Wandlers;
d) Durchführen einer Kabelapproximation durch Nachbilden der Inversen der Kabelübertragungsfunktion mit Hilfe eines digital realisierten Kabelapproximationsfilters und Filtern mit demselben, um ein entzerrtes Signal zu erhalten;
e) Interpolieren und Filtern des entzerrten Signals mittels einer Interpolations- und Filtereinheit; und
f) Dezimieren des interpolierten und gefilterten Signals mittels eines Dezimierers, der in der Regelschleife eines Phasenregelkreises zum Rückgewinnen der ursprünglichen Daten aus dem entzerrten Signal angeordnet ist.

Vorzugsweise werden die zurückgewonnenen Daten synchron zum generierten Takt ausgegeben.

Gemäß einer bevorzugten Ausgestaltung der Erfindung wird ein Analog/Digital-Wandler verwendet, der das Signal n-fach überabtastet und dabei vorzugsweise niederfrequentes Rauschen in höherfrequente spektrale Rauschanteile oberhalb der Datenrate transformiert. Vorzugsweise wird ein SD-ADC (Sigma-Delta Analog/Digital-Wandler) verwendet, dessen spezifisches Noise-Shaping-Verhalten durch die Überabtastung genutzt wird.

Dies ist ein weiterer wesentlicher Aspekt der Erfindung. Die Überabtastung des Signals durch einen SD-ADC erfolgt optimal mit einer Mindest-Abtastrate von n≥8. Die Höhe der Abtastrate reduziert die Anforderungen an den vorgeschalteten Anti-Aliasing-Filter in der Pol- oder Grenzfrequenz als auch in der Stabilität der Polfrequenz. Die Wahl der Abtastrate ist abhängig von der gewünschten Noise-Shaping-Charakteristik des SD-ADC, der zu implementierenden Ordnungszahl und des Filtertyps des Anti-Aliasing-Filters und der nachgeschalteten Tiefpassfilterung zur Bandbegrenzung des Signals.

Sämtliche dem Analog/Digital-Wandler nachfolgende Einheiten bis zum Datenausgang des Empfängers sind vorzugsweise in digitaler Schaltungstechnik realisiert.

Das vom Analog/Digital-Wandler ausgegebene Signal wird vorzugsweise nochmals mittels eines Filters (digitaler Tiefpass höherer Ordnung) gefiltert, wobei insbesondere externes (Kanal-) Rauschen, Quantisierungsrauschen und das durch Noise-Shaping transformierte Rauschen oberhalb der Symbolrate (Übertragungsfrequenz) unterdrückt und somit das Nutzsignal oberhalb der Symbolrate bandbegrenzt wird. Der digitale Filter hat dabei vorzugsweise eine Grenzfrequenz, die sehr knapp, insbesondere nur 10 - 20 % über, oder nahezu auf der Symbolrate liegt.

Gemäß einer bevorzugten Ausgestaltung der Erfindung wird die Datenrate des derart bandbegrenzten Signals mittels eines Dezimierers auf eine niedrigere Taktrate zur Weiterverarbeitung gebracht. Damit wird insbesondere der Schaltungsaufwand (und die Leistungsaufnahme) für eine nachfolgende Filterstufe signifikant reduziert.

Die nachfolgende Filterstufe umfasst vorzugsweise einen digitalen Hochpass zur Unterdrückung von Offset- und DC-Komponenten unterhalb einer vorgegebenen unteren Grenzfrequenz, insbesondere unterhalb der kleinsten Spektralkomponente des Datenstroms.

Gemäß einer bevorzugten Ausführungsform der Erfindung wird zur Kompensation der Kanalverzerrung ein digitales Kabelapproximationsfilter, insbesondere ein FIR-Filter (Finite-Impulse-Response-Filter) verwendet. Die Dezimation der Datenrate vor dem Kabelapproximationsfilter reduziert den Schaltungsaufwand, insbesondere die Fläche und den Stromverbrauch, für diesen Filter erheblich.

Die Übertragungseigenschaft des Kabelapproximationsfilters gleicht einem Hochpass auf Grund der Nachbildung einer inversen Kabeldämpfung. Dies führt dazu, dass Rauschen, verursacht durch endliche Wortlänge (Quantisierungsrauschen) und/oder endliche Wortbreite der Koeffizienten, innerhalb des zu adaptierenden Nutzsignalspektrum verstärkt werden. Diese Eigenschaft wird allgemein als Noise-Enhancement bezeichnet. Es ist darauf zu achten, dass die Wortbreite ausreichend lang ist, da die Filterrealisierung auf Rechenoperationen basiert.

Die Verstärkung der Verstärkerstufe am Empfängereingang sowie das Verhalten des digitalen Kabelapproximationsfilters sind einstellbar und auch im Betrieb auf die geänderten Applikationsbedingungen anpassbar.

Gemäß einer bevorzugten Ausgestaltung der Erfindung erfolgt die Steuerung der Verstärkerstufe sowie des digitalen Kabelapproximationsfilters durch eine Equalizer-Steuereinheit, die den optimalen Filterkoeffizientensatz für das digitale Kabelapproximationsfilter in Abhängigkeit von der Signalamplitude selektiert und einstellt.

Die Daten für das digitale Kabelapproximationsfilter werden vorzugsweise in einem RAM- oder ROM-Speicher abgelegt, können aber auch über eine digitale Schnittstelle von einer externen Quelle geladen werden.

Zur Verbesserung der nachfolgenden Takt- und Datenrückgewinnung wird die Datenrate des entzerrten Signals nach dem Kabelapproximationsfilter erhöht. Hierzu ist die Interpolations- und Filtereinheit vorgesehen, die einen weiteren digitalen Tiefpassfilter zur Unterdrückung von Frequenzanteilen oberhalb der Symbolrate, die vor allem durch die Interpolation entstanden sind, aufweist.

Die Interpolations- und Filtereinheit liegt außerhalb der Regelschleife eines nachfolgenden digitalen Phasenregelkreises zur Datenrückerkennung.

Phasenregelkreise bzw. PLL-Schaltungen (PLL: Phase Locked Loop) sind Schaltungen zur Frequenz- und Phasensynchronisation zweier Signalschwingungen, insbesondere von Taktsignalen. Das am Ausgang des Phasenregelkreises ausgegebene Ausgangstaktsignal ist im Normalbetrieb synchron zu dem am Eingang anliegenden Eingangstaktsignal.

Die Regelschleife des Phasenregelkreises umfasst vorzugsweise einen Dezimierer, einen Phasendetektor sowie eine Einrichtung zur Einstellung des Takt- bzw. Phasenregelverhaltens, insbesondere einen Timing-Loop-Filter. Gemäß einer bevorzugten Ausführungsform der Erfindung wird der im Phasendetektor verwendete Amplituden-Schwellenwert durch einen Peak-Detektor (Amplitudendetektor) geregelt.

Der digitale Phasenregelkreis umfasst ferner vorzugsweise eine Einheit zur Ausgangsdatensynchronisation sowie einen digitalen gesteuerten Oszillator zur Erzeugung des regenerierten Taktes, wobei die Einheit zur Ausgangsdatensynchronisation einen synchron zum Takt des Oszillators ausgegebenen Datenstrom liefert.

Ein wesentlicher Aspekt der erfindungsgemässen PLL-Schaltung ist ein am Eingang der Phasenregelschleife angeordneter Dezimator. Für die Phasenregleschleife ist es notwendig, dass je nach Phasenlage zur Taktsynchronisation ein Abtastwert mit der richtigen Phasenlage aus dem Datenstrom ausgewählt wird. Diese Funktion ist kombiniert mit einem Dezimator zur Reduktion der Taktrate. Zur zusätzlichen Unterdrückung von Rauschkomponenten wird die Tiefpass-Charakteristik des Dezimators genutzt. Weiterhin liegt der Vorteil in der Reduktion der Taktrate sowie des Flächenbedarfs und Leistungsaufnahme der nachfolgenden Schaltungen.

Die erfindungsgemäße Vorrichtung zur Rekonstruktion von Daten aus einem Signal, das durch Übertragung über eine Übertragungsstrecke mit einer Kabelübertragungsfunktion verzerrt wurde, umfasst:
a) einen Verstärker zur Kompensation der Kabeldämpfung;
b) einen Tiefpassfilter zur Unterdrückung hochfrequenter Störer oberhalb der Symbolrate;
c) einen überabgetasteten Analog/Digital-Wandler mit zum Diskretisieren des analogen Signals;
d) einen digital realisierten Kabelapproximationsfilter mit einer an die Inverse der Kabelübertragungsfunktion angepassten Übertragungsfunktion, um ein entzerrtes Signal zu erhalten;
e) eine digitale Interpolations- und Filtereinheit zum Interpolieren und Filtern des entzerrten Signals, und
f) einen Phasenregelkreis zum Rückgewinnen der Daten und des Taktes aus dem entzerrten Signal, wobei in einer Regelschleife des Phasenregekreises ein digitaler Dezimierer angeordnet ist.

Die erfindungsgemäße Vorrichtung umfasst vorzugsweise ferner
f) einen Tiefpassfilter zur Unterdrückung hochfrequenter Störfrequenzen oberhalb der Symbolrate, der vorzugsweise als digitaler Noise- und Crosstalkfilter ausgebildet ist;
g) einen Hochpassfilter zur Unterdrückung niederfrequenter Störer unterhalb der niedrigsten Spektralanteile des Nutzsignal;
h) einen Dezimator zur Reduktion der Taktrate; und
i) einen Interpolator mit nachgeschaltetem Tiefpass zur Erhöhung der Taktrate und Formfilterung .

Die Erfindung wird nachstehend anhand der beigefügten Figuren beispielhaft näher erläutert. Es zeigen:
Fig. 1 einen vorwiegend digital realisierten Empfänger gemäß einem Ausführungsbeispiel der Erfindung;
Fig. 2 einen bekannten, überwiegend mit analoger Schaltungstechnik aufgebauten Empfänger.

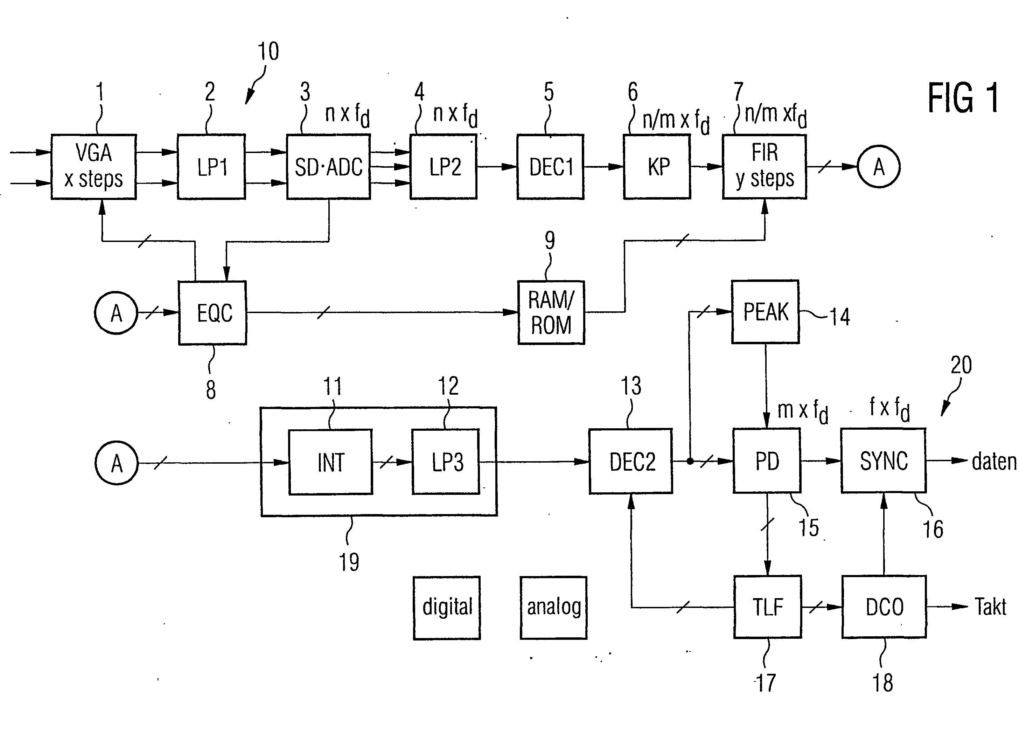

Der Empfängerpfad des Entzerrers 10 von Fig. 1 umfaßt (von links nach rechts) einen Verstärker, der als VGA-Stufe 1 ausgeführt ist, und einen analogen Tiefpass 2, der einen Anti-Aliasing- und Cross-Talk-Filter für einen nacholgenden überabgetasteten Analog/Digital-Wandler 3 bildet.

Ein mit dem Analog/Digital-Wandler 3 verbundener Tiefpassfilter 4 dient zur Unterdrückung von Rauschanteilen oberhalb der Symbolrate und zur Signalbandbegrenzung oberhalb dieser Fundamental-Frequenz, wodurch externes Rauschen, Quantisierungsrauschen und das durch Noise-Shaping transformierte Rauschen unterdrückt wird.

Der Analog/Digital-Wandler ist als SD-ADC (Sigma-Delta ADC) ausgeführt, der das zugeführte Signal n-fach überabtastet. Durch die Überabtastung wird das Noise-Shaping-Verhalten des Wandlers ausgenutzt.

Zur Reduktion der Datenrate um einen Faktor m, mit vorzugsweise m=5-10, ist ein digitaler Dezimierer 5 vorgesehen, der zwischen dem digitalen Tiefpassfilter 4 und einem digitalen Kabelapproximationsfilter 7 angeordnet ist.

Ein am Dezimierer 5 angeschlossener digitaler Hochpass dient zur Filterung von niederfrequentem Rauschen und zur Offset- und DC-Komponentenunterdrückung unterhalb der kleinsten Spektralkomponente des Datenstromes.

Den Ausgang des Entzerrers 10 bildet ein digitales FIR-Filter 7 als Kabelapproximationsfilter zur Kompensation der Kabelverzerrung.

Ferner ist eine digitale Equalizer-Steuereinheit 8 vorgesehen, die den Verstärker 1 sowie das FIR-Filter in Abhängigkeit von der Signalamplitude steuert.

Das am Ausgang des Entzerrers 10 ausgegebene entzerrte Signal wird mittels einer Interpolations- und Filtereinheit 19, umfassend eine Interpolationseinheit 11 sowie einen Tiefpassfilter 12, insbesondere linear interpoliert und bandbegrenzt. Der Tiefpassfilter 12 dient dabei der Unterdrückung von Frequenzanteilen oberhalb der Symbolrate, die insbesondere durch die Interpolation entstanden sind.

Der Empfänger umfasst ferner einen digitalen Phasenregelkreis mit einem Dezimierer 13, der einen Teil der Phasenregelschleife bildet. Die Regelschleife umfasst außerdem einen Phasendetektor 15 zur Ermittlung des Phasenfehlers der detektierten Daten bezogen auf den rückgewonnenen Takt sowie ein Timing-Loop-Filter zur Einstellung des Taktregelverhaltens.

Das Timing-Loop-Filter 17 ist mit dem Phasendetektor 15, dem Dezimierer 13 sowie einem gesteuerten Oszillator 18 zur Erzeugung des regenerierten Taktes verbunden. Der Phasendetektor 15 ist mit dem Dezimierer 13, dem Timing-Loop-Filter 17, einem Peak-Detektor 14 zur Nachregelung des im Phasendetektor 15 verwendeten Schwellenwertes, sowie einer Synchronisationseinrichtung 16 verbunden, die einen zum Takt des Oszillators 18 synchronen Datenstrom am Datenausgang (Daten) liefert. Der Takt wird am Taktausgang (Takt) ausgegeben.

Bezüglich des in Figur 2 dargestellten, bekannten Empfängers wird auf die Beschreibungseinleitung verwiesen.

### Bezugszeichenliste

- 1: Verstärker
- 2: Analoger Tiefpassfilter
- 3: Analog/Digital-Wandler
- 4: Digitaler Tiefpassfilter
- 5: Digitaler Dezimierer
- 6: Digitaler Hochpass
- 7: Kabelapproximationsfilter
- 8: Equalizer-Steuereinheit
- 9: Speichereinrichtung
- 10: Entzerrer
- 11: Interpolationseinheit
- 12: Tiefpassfilter
- 13: Dezimierer
- 14: Peak-Detektor
- 15: Phasendetektor
- 16: Synchronisationseinheit
- 17: Timing-Loop-Filter
- 18: Steuerbarer Oszillator
- 19: Interpolations- und Filtereinheit
- 20: Digitaler Phasenregelkreis
- 30,31: Signaleingang
- 32: Analoger Verstärker
- 33: Analoges Tiefpassfilter
- 34: Analoges Kabelapproximationsfilter
- 35: Analoger Tiefpass
- 36: Komparator
- 37: Digitale Equalizer-Steuereinheit
- 38: Analoger Level-Detektor
- 39: Analoger Peak-Detektor

## Patentansprüche

1. Verfahren zur Rekonstruktion von mit einer Symbolrate getakteten Daten aus einem Signal, das durch Übertragung über eine Übertragungsstrecke mit einer Kabelübertragungsfunktion verzerrt und gedämpft wurde, umfassend folgende Schritte:
a) Verstärken der durch die Übertragung gedämpften Signalamplitude;
b) Filtern hochfrequenter Störfrequenzen oberhalb der Symbolrate;
c) Diskretisieren des analogen Signals mittels eines überabgetasteten Analog/Digital-Wandlers (3); und
d) Durchführen einer Kabelapproximation durch Nachbilden der Inversen der Kabelübertragungsfunktion mittels eines digital realisierten Kabelapproximationsfilters (7) und Filtern des diskretisierten Signals mit demselben, um ein entzerrtes Signal zu erhalten;
**dadurch gekennzeichnet, dass** ferner die Schritte:
e) Interpolieren und Filtern des entzerrten Signals mittels einer Interpolations- und Filtereinheit (19); und
f) Dezimieren des interpolierten und gefilterten Signals mittels eines Dezimierers (13), der in der Regelschleife eines Phasenregelkreises zum Rückgewinnen der ursprünglichen Daten aus dem entzerrten Signal angeordnet ist, ausgeführt werden.

2. Verfahren nach Anspruch 1,
**dadurch gekennzeichnet,**
**dass** der Analog/Digital-Wandler (3) das zugeführte Datensignal n-fach überabtastet, um niederfrequentes Rauschen in ein höherfrequentes Spektrum, insbesondere oberhalb der Symbolrate, zu transformieren.

3. Verfahren nach Anspruch 1 oder 2,
**gekennzeichnet durch**,
Filtern hochfrequenter Störer mittels eines digitalen Filters (4), das zwischen dem Analog/Digital-Wandler (3) und dem Kabelapproximationsfilter (7) angeordnet ist.

4. Verfahren nach einem der vorhergehenden Ansprüche,
**gekennzeichnet durch**,
Reduzieren der Datenrate des diskreten Signals um wenigstens einen Faktor m=2, besser um einen Faktor 5-10 oder mehr, um ein dezimiertes Signal zu erhalten.

5. Verfahren nach einem der vorhergehenden Ansprüche,
**gekennzeichnet durch**,
Filtern von niederfrequenten Anteilen unterhalb einer vorgegebenen unteren Grenzfrequenz, insbesondere von Gleichstromanteilen, mittels eines digitalen Filters (6).

6. Verfahren nach Anspruch 5,
**dadurch gekennzeichnet,**
**dass** das Filtern niederfrequenter Anteile vor dem Durchführen der Kabelapproximation erfolgt.

7. Verfahren nach einem der vorhergehenden Ansprüche,
**dadurch gekennzeichnet,**
**dass** die Kabelapproximation mit einem digitalen FIR-Filter durchgeführt wird.

8. Verfahren nach einem der vorhergehenden Ansprüche,
**dadurch gekennzeichnet, dass** die Verstärkung der Signalamplitude und die Kabelapproximation von einer digital realisierten Equalizer-Steuereinheit (8) gesteuert wird.

9. Verfahren nach einem der vorhergehenden Ansprüche,
**dadurch gekennzeichnet,**
**dass** die zur Einstellung der Kabelapproximation erforderlichen Koeffizientensätze in einer Speichereinrichtung (9) zwischengespeichert sind.

10. Verfahren nach Anspruch 1,
**dadurch gekennzeichnet,**
**dass** die Interpolation und Tiefpassfilterung außerhalb einer Regelschleife eines nachfolgenden Phasenregelkreises (20) zur Takt- und Datenrückgewinnung erfolgt.

11. Verfahren nach Anspruch 1,
**dadurch gekennzeichnet,**
**dass** ein zum Signaltakt synchron laufender, regenerierter Takt mittels des Phasenregelkreises (20) erzeugt wird.

12. Verfahren nach Anspruch 1,
**dadurch gekennzeichnet,**
**dass** die Regelung der Dezimierung mit Hilfe eines Peak-Detektors (14) und eines Phasendetektors (15) erfolgt.

13. Verfahren nach Anspruch 1,
**dadurch gekennzeichnet,**
**dass** die Einstellung des Taktregelverhaltens des Phasenregelkreises (20) mittels eines Timing-Loop-Filters (17) erfolgt.

14. Verfahren nach Anspruch 11,
**dadurch gekennzeichnet,**
**dass** die zurückgewonnenen Daten synchron zum regenerierten Takt ausgegeben werden.

15. Vorrichtung zur Rekonstruktion von mit einer Symbolrate getakteten (rein stochastischen) Daten aus einem analogen Signal, das durch Übertragung über eine Übertragungsstrecke mit einer Kabelübertragungsfunktion verzerrt und gedämpft wurde, umfassend:
a) einen Verstärker (1) zur Verstärkung der durch die Übertragung gedämpften Signalamplitude;
b) einen Tiefpass (2) zum Filtern hochfrequenter Störer oberhalb der Symbolrate;
c) einen Analog/Digital-Wandler (3) zum Diskretisieren des analogen Signals;
d) ein digitales Kabelapproximationsfilter (7) mit einer an die Inverse der Kabelübertragungsfunktion angepassten Übertragungsfunktion zum Erzeugen eines im wesentlichen entzerrten, diskreten Signals;
**dadurch gekennzeichnet, dass** ferner
e) eine digitale Interpolations- und Filtereinheit (19) zum Interpolieren und Filtern des entzerrten Signals; und
f) ein Phasenregelkreis (20) zum Rückgewinnen der Daten aus dem entzerrten Signal, wobei in einer Regelschleife des Phasenregelkreises (20) ein digitaler Dezimierer (13) angeordnet ist, vorgesehen ist.

16. Vorrichtung nach Anspruch 15,
**dadurch gekennzeichnet,**
**dass** der Analog/Digital-Wandler (3) das analoge Datensignal n-fach überabtastet, um niederfrequentes Rauschen in ein höherfrequentes Spektrum, insbesondere oberhalb der Symbolrate, zu transformieren.

17. Vorrichtung nach Anspruch 15 oder 16,
**dadurch gekennzeichnet,**
**dass** nach dem Analog/Digital-Wandler (3) ein digitaler Tiefpass (4) vorgesehen ist, um hochfrequente Störer oberhalb der Symbolrate zu filtern.

18. Vorrichtung nach Anspruch 17,
**dadurch gekennzeichnet,**
**dass** nach dem Tiefpass (4) ein Dezimierer (5) vorgesehen ist, um ein dezimiertes, diskretes Signal für einen nachfolgenden Hochpass (6) zu erhalten.

19. Vorrichtung nach einem der Ansprüche 15 bis 18,
**dadurch gekennzeichnet,**
**dass** ein Hochpass (6) zum Filtern von niederfrequenten Anteilen unterhalb einer vorgegebenen unteren Grenzfrequenz, insbesondere von Gleichstromanteilen, vorgesehen ist.

20. Vorrichtung nach einem der Ansprüche 15 bis 19,
**dadurch gekennzeichnet,**
**dass** ein digitales Kabelapproximationsfilter (7), insbesondere ein FIR-Filter, zur Signalentzerrung vorgesehen ist.

21. Vorrichtung nach Anspruch 20,
**dadurch gekennzeichnet,**
**dass** eine Equalizer-Steuereinheit (8) zum Steuern der Einstellung des Verstärkers (1) und des Verhaltens des Kabelapproximationsfilters (7) vorgesehen ist.

22. Vorrichtung nach Anspruch 21,
**dadurch gekennzeichnet,**
**dass** die Koeffizientensätze zum Regeln des Kabelapproximationsfilters (7) in einer Speichereinrichtung (9) zwischengespeichert sind.

## Claims

1. Method for reconstructing data, clocked at a symbol rate, from a signal which has been distorted and attenuated by transmission via a transmission link path with a cable transfer function, comprising the following steps:
a) amplifying the signal amplitude attenuated by the transmission;
b) filtering radio-frequency interference frequencies above the symbol rate;
c) digitizing the analogue signal by means of an oversampled analogue/digital converter (3); and
d) carrying out a cable approximation process by simulation of the inverse of the cable transfer function by means of a digital cable approximation filter (7), and filtering of the digitized signal using the same, in order to obtain an equalized signal;
**characterized in that** the following steps are also carried out:
e) interpolating and filtering of the equalized signal by means of an interpolation and filter unit (19); and
f) decimating of the interpolated and filtered signal by means of a decimator (13) which is arranged in the control loop of a phase locked loop for recovery of the original data from the equalized signal.

2. Method according to Claim 1, **characterized in that** the analogue/digital converter (3) oversamples the supplied data signal n-times in order to transform low-frequency noise into a higher-frequency spectrum, particularly above the symbol rate.

3. Method according to Claim 1 or 2, **characterized by** the filtering of radio-frequency interference sources by means of a digital filter (4) which is arranged between the analogue/digital converter (3) and the cable approximation filter (7).

4. Method according to one of the preceding claims, **characterized by** the data rate of the discrete signal being reduced by at least a factor of m=2, better by a factor of 5-10 or more, in order to obtain a decimated signal.

5. Method according to one of the preceding claims, **characterized by** the filtering of low-frequency components below a predetermined lower cut-off frequency, particularly of direct-current components, by means of a digital filter (6).

6. Method according to Claim 5, **characterized in that** low-frequency components are filtered before the cable approximation process is carried out.

7. Method according to one of the preceding claims, **characterized in that** the cable approximation process is carried out by means of a digital FIR filter.

8. Method according to one of the preceding claims, **characterized in that** the amplification of the signal amplitude and the cable approximation process are controlled by a digital equalizer control unit (8).

9. Method according to one of the preceding claims, **characterized in that** the sets of coefficients required for setting the cable approximation are temporarily stored in a memory device (9).

10. Method according to Claim 1, **characterized in that** the interpolation and low-pass filtering take place outside a control loop for a subsequent phase locked loop (20) for clock and data recovery.

11. Method according to Claim 1, **characterized in that** a regenerated clock which runs synchronously with the signal clock is generated by means of the phase locked loop (20).

12. Method according to Claim 1, **characterized in that** the decimation is controlled with the aid of a peak detector (14) and of a phase detector (15).

13. Method according to Claim 1, **characterized in that** the clock control characteristic of the phase locked loop (20) is adjusted by means of a timing loop filter (17).

14. Method according to Claim 11, **characterized in that** the recovered data is output synchronously with the regenerated clock.

15. Device for reconstructing (purely stochastic) data clocked at a symbol rate, from an analogue signal which has been distorted and attenuated by transmission via a transmission link path with a cable transfer function, comprising the following:
a) an amplifier (1) for amplifying the signal amplitude attenuated by the transmission;
b) a low-pass filter (2) for filtering radio-frequency interference sources above the symbol rate;
c) an analogue/digital converter (3) for digitizing the analogue signal;
d) a digital cable approximation filter (7) having a transfer function which is matched to the inverse of the cable transfer function, for production of an essentially equalized, discrete signal;
**characterized in that**, in addition,
e) a digital interpolation and filter unit (19) is provided for the interpolation and filtering of the equalized signal; and
f) a phase locked loop (20) is provided for recovery of the data from the equalized signal, with a digital decimator (13) being arranged in a control loop for the phase locked loop (20).

16. Device according to Claim 15, **characterized in that** the analogue/digital converter (3) oversamples the analogue data signal n-times in order to transform low-frequency noise to a radio-frequency spectrum, particularly above the symbol rate.

17. Device according to Claim 15 or 16, **characterized in that** a digital low-pass filter (4) is provided following the analogue/digital converter (3), for filtering radio-frequency interference sources above the symbol rate.

18. Device according to Claim 17, **characterized in that** a decimator (5) is provided following the low-pass filter (4), in order to obtain a decimated, discrete signal for a subsequent high-pass filter (6).

19. Device according to one of Claims 15 to 18, **characterized in that** a high-pass filter (6) is provided for filtering low-frequency components below a predetermined lower cut-off frequency, particularly of direct-current components.

20. Device according to one of Claims 15 to 19, **characterized in that** a digital cable approximation filter (7), particularly a FIR filter, is provided for signal equalization.

21. Device according to Claim 20, **characterized in that** an equalizer control unit (8) is provided for controlling the setting of the amplifier (1) and the characteristic of the cable approximation filter (7).

22. Device according to Claim 21, **characterized in that** the sets of coefficients for controlling the cable approximation filter (7) are temporarily stored in a memory device (9).

## Revendications

1. Procédé de reconstruction de données, cadencées avec un débit de symboles, à partir d'un signal qui a été déformé et atténué par la transmission sur un trajet de transmission avec une fonction de transmission câblée, comprenant les étapes suivantes :
a) amplification de l'amplitude du signal atténuée par la transmission ;
b) filtrage de fréquences parasites haute fréquence au-dessus du débit de symboles ;
c) discrétisation du signal analogique au moyen d'un convertisseur analogique/numérique (3) suréchantillonné ; et
d) réalisation d'une approximation câblée par simulation des inverses de la fonction de transmission câblée au moyen d'un filtre d'approximation câblée (7) à réalisation numérique et filtrage du signal discrétisé avec celui-ci, afin d'obtenir un signal corrigé ;
**caractérisé en ce que**, en outre, les étapes suivantes sont mise en oeuvre :
e) interpolation et filtrage du signal corrigé au moyen d'une unité d'interpolation et de filtrage (19) ; et
f) décimation du signal soumis à interpolation et filtré au moyen d'un décimateur (13) qui est disposé dans la boucle d'asservissement d'une boucle à verrouillage de phase pour la récupération des données originales à partir du signal corrigé.

2. Procédé selon la revendication 1, **caractérisé en ce que** le convertisseur analogique/numérique (3) suréchantillonne n fois le signal de données amené afin de transformer le bruit basse fréquence en un spectre haute fréquence, en particulier au-dessus du débit de symboles.

3. Procédé selon la revendication 1 ou 2,
**caractérisé par** le filtrage de parasites haute fréquence au moyen d'un filtre numérique (4) qui est disposé entre le convertisseur analogique/numérique (3) et le filtre d'approximation câblée (7).

4. Procédé selon l'une des revendications précédentes, **caractérisé par** la réduction du débit de données du signal discret d'au moins un facteur m=2, mieux d'un facteur 5-10 ou plus, afin d'obtenir un signal décimé.

5. Procédé selon l'une des revendications précédentes,
**caractérisé par** le filtrage de fractions basse fréquence au-dessous d'une fréquence limite inférieure prédéfinie, en particulier de fractions de courant continu, au moyen d'un filtre numérique (6).

6. Procédé selon la revendication 5,
**caractérisé en ce que** le filtrage de fractions basse fréquence intervient avant la réalisation de l'approximation câblée.

7. Procédé selon l'une des revendications précédentes,
**caractérisé en ce que** l'approximation câblée est effectuée avec un filtre à réponse impulsionnelle finie numérique.

8. Procédé selon l'une des revendications précédentes,
**caractérisé en ce que** l'amplification de l'amplitude du signal et l'approximation câblée sont commandées par une unité de commande d'égalisateur (8) à réalisation numérique.

9. Procédé selon l'une des revendications précédentes,
**caractérisé en ce que** les taux de coefficient nécessaires pour le réglage de l'approximation câblée sont mis en mémoire intermédiaire dans un dispositif de mémoire (9).

10. Procédé selon la revendication 1,
**caractérisé en ce que** l'interpolation et le filtrage passe-bas interviennent à l'extérieur d'une boucle d'asservissement d'une boucle à verrouillage de phase (20) en aval pour l'acquisition de la cadence et des données.

11. Procédé selon la revendication 1,
**caractérisé en ce qu'**une cadence régénérée synchronisée avec la cadence des signaux est produite au moyen de la boucle à verrouillage de phase (20).

12. Procédé selon la revendication 1, **caractérisé en ce que** la régulation de la décimation est effectuée à l'aide d'un détecteur de crête (14) et d'un détecteur de phase (15).

13. Procédé selon la revendication 1, **caractérisé en ce que**
le réglage du comportement en régulation de cadence de la boucle à verrouillage de phase (20) est effectué au moyen d'un filtre Timing-Loop (17).

14. Procédé selon la revendication 11, **caractérisé en ce que**
les données récupérées sont délivrées de façon synchronisée avec la cadence régénérée.

15. Dispositif de reconstruction de données cadencées (de façon purement stochastique) avec un débit de symboles à partir d'un signal analogique qui est déformé et atténué par la transmission sur un trajet de transmission avec une fonction de transmission câblée, comprenant :
a) un amplificateur (1) pour l'amplification de l'amplitude du signal atténuée par la transmission ;
b) un filtre passe-bas (2) pour le filtrage de parasites haute fréquence au-dessus du débit de symboles ;
c) un convertisseur analogique/numérique (3) pour la discrétisation du signal analogique ;
d) un filtre numérique d'approximation câblée (7) avec une fonction de transmission adaptée à l'inverse de la fonction de transmission câblée pour la production d'un signal discret sensiblement corrigé ;
**caractérisé en ce que**, en outre, il est prévu
e) une unité numérique d'interpolation et de filtrage (19) pour l'interpolation et le filtrage du signal corrigé ; et
f) une boucle à verrouillage de phase (20) pour la récupération des données à partir du signal corrigé, un décimateur numérique (13) étant disposé dans une boucle d'asservissement de la boucle à verrouillage de phase (20).

16. Procédé selon la revendication 15,
**caractérisé en ce que** le convertisseur analogique/numérique (3) suréchantillonne n fois le signal de données analogique afin de transformer le bruit basse fréquence en un spectre haute fréquence, en particulier au-dessus du débit de symboles.

17. Dispositif selon la revendication 15 ou 16,
**caractérisé en ce que**, en aval du convertisseur analogique/numérique (3), il est prévu un filtre passe-bas numérique (4) pour filtrer des parasites haute fréquence au-dessus du débit de symboles.

18. Dispositif selon la revendication 17,
**caractérisé en ce que**, en aval du filtre passe-bas (4), il est prévu un décimateur (5) afin d'obtenir un signal discret décimé pour un filtre passe-haut (6) placé en aval.

19. Dispositif selon l'une des revendications 15 à 18,
**caractérisé en ce qu'**il est prévu un filtre passe-haut (6) pour le filtrage de fractions basse fréquence au-dessous d'une fréquence limite inférieure prédéfinie, en particulier de fractions de courant continu.

20. Dispositif selon l'une des revendications 15 à 19,
**caractérisé en qu'**il est prévu un filtre d'approximation câblée (7) numérique, en particulier un filtre à réponse impulsionnelle finie numérique, pour la correction du signal.

21. Dispositif selon la revendication 20,
**caractérisé en ce qu'**il est prévu une unité de commande égalisateur (8) pour la commande du réglage de l'amplificateur (1) et du comportement du filtre d'approximation câblée (7).

22. Dispositif selon la revendication 21,
**caractérisé en ce que** les taux de coefficient pour la régulation du filtre d'approximation câblée (7) sont mis en mémoire intermédiaire dans un dispositif de mémoire (9).
